Europäisches Patentamt

European Patent Office

Office européen des brevets

(19)

(11) EP 0 805 540 B1

(12) EUROPEAN PATENT SPECIFICATION

(45) Date of publication and mention
of the grant of the patent:
**09.06.2004 Bulletin 2004/24**

(21) Application number: **97107003.2**

(22) Date of filing: **28.04.1997**

(51) Int Cl.⁷: **H02J 7/00**, G05F 1/577,
H02J 1/00

(54) **A power supply system for a plurality of electronic devices or units on board a motor vehicle**

Stromversorgungssystem für ein Anzahl von elektronischen Einrichtungen oder Baugruppen an Bord eines Kraftfahrzeuges

Un système d'alimentation pour une pluralité de dispositifs ou unités électroniques à bord d'un véhicule moteur

(84) Designated Contracting States:
**DE ES FR GB SE**

(30) Priority: **03.05.1996 IT TO960354**

(43) Date of publication of application:
**05.11.1997 Bulletin 1997/45**

(73) Proprietor: **MAGNETI MARELLI SISTEMI ELETTRONICI S.p.A.**
**20011 Corbetta (Milano) (IT)**

(72) Inventors:
• **Nepote, Andrea**
**10131 Torino (IT)**
• **Salerno, Franco**
**10091 Alpignano (Torino) (IT)**
• **Cotignoli, Giuseppe**
**10033 Collegno (Torino) (IT)**

(74) Representative: **Quinterno, Giuseppe et al**
**Jacobacci & Partners S.p.A.,**
**Corso Regio Parco, 27**
**10152 Torino (IT)**

(56) References cited:
**EP-A- 0 694 826       US-A- 4 629 966**

• **ELEKTRONIK, vol. 38, no. 4, 17 February 1989, pages 48-51, 54 - 56, XP000212715 HILL T ET AL: "MIKROCOMPUTER IN KFZ-ANWENDUNGEN"**

EP 0 805 540 B1

**EP 0 805 540 B1**

## Description

The present invention relates to a power supply system for a plurality of electronic devices and/or units of the kind defined in the preamble of Claim 1.

Electronic control systems and devices utilized on board motor vehicles are becoming even more numerous.

This involves problems also from the point of view of electrical supply of such systems and devices, and for the dissipation of heat energy.

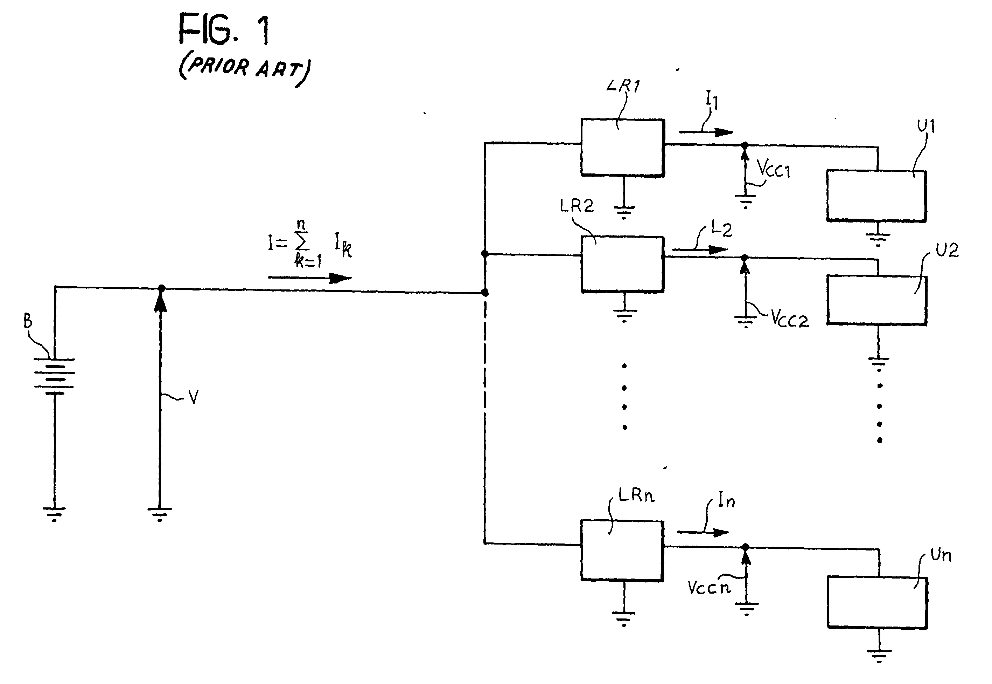

Currently, as disclosed for instance in ELEKTRONIK, vol. 38, No. 4, 17 February 1989, pages 48-51, 54-56, XP000212715, Hill et al. "Mikrocomputer in KFZ-Anwendungen", for the supply of a plurality of electronic systems or devices on board a motor vehicle, arrangements of the type schematically illustrated in Figure 1 of the attached drawings are adopted. In the drawings, U1, U2 and Un indicate n electronic control units installed on board a motor vehicle. Each of these units is associated with a respective stabilized supply or linear voltage regulator LR1, LR2 ... LRn. These linear voltage regulators have respective inputs connected to the battery B mounted on board the motor vehicle.

It is well known that the on-board battery is a non-stabilized DC voltage source.

The individual voltage regulators LR1 ... LRn are in general rather expensive in that they must be able to resist high input over-voltages and must be of "low dropout" type in that the voltage delivered by the battery can fall, for example, down to 6V during starting.

The use of ever faster and more complex digital circuits has lead to an increase in the currents consumed and therefore the power dissipated by the various electronic control units. Therefore, the individual voltage regulators LR1 ... LRn must often be associated with heat dissipators, with problems such as dimensions, weight and cost.

A supply system of the initially specified kind is disclosed in EP-A-0 694 826. This prior document describes an information processing apparatus comprising a plurality of electric circuits and a respective power supply line for each of said circuits. A switching regulator controls the power that is supplied by an external power source. The voltages of said power supply lines are monitored and the minimum among them is compared with a given reference voltage. Connecting/disconnecting means are provided for starting or halting the power supply from the power source in response to the comparison result.

The object of the present invention is to provide a supply system for a plurality of electronic devices or units adapted for use on board a motor vehicle, which makes it possible to reduce the current consumed from the battery, reduce heat dissipation as well as reduce the weight, the volume and the overall cost of the system.

This and other objects are achieved according to the invention with a supply system according to claim 1.

Further characteristics and advantages of the invention will become apparent from the following detailed description given purely by way of non-limitative example, with reference to the attached drawings, in which:

Figure 1, already described, is a block diagram which illustrates the structure of a prior art supply system;

Figure 2 is a block diagram which shows the structure of a supply system according to the invention; and

Figure 3 is a diagram which shows in greater detail one embodiment of a centralized voltage regulator incorporated in a supply system according to the invention.

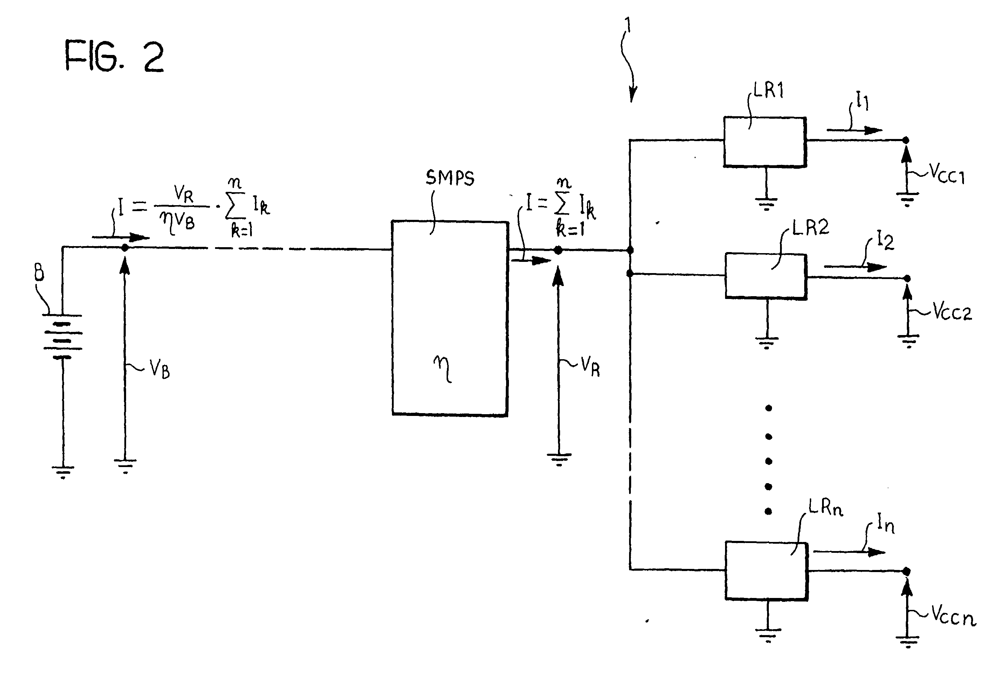

As is seen in Figure 2, in a supply system 1 according to the invention, between the battery B and the inputs of the individual voltage regulators LR1, LR2 ... LRn there is interposed a centralized switching voltage regulator SMPS arranged to provide a stabilized output voltage $V_R$ of lower value, less than the voltage $V_B$ delivered by the battery B, but nevertheless greater than the (maximum) value of the stabilized voltages $V_{cc1}$, $V_{cc2}$ ... $V_{ccn}$ intended to be delivered by the said voltage regulators.

The voltage regulators LR1, LR2 ... LRn in the system according to the invention are dimensioned in such a way as to be able to deliver their respective stabilized voltages $V_{cc1}$, $V_{cc2}$ ... $V_{ccn}$ when their respective inputs receive the stabilized voltage of reduced value $V_R$ delivered by the centralized voltage regulator SMPS.

Thus, for example, if the battery voltage $V_B$ has a nominal value of 14V, and if the maximum value of the stabilized voltages required by the regulators LR1 ... LRn is for example 5V, the stabilized voltage output from the centralized regulator SMPS is equal for example to 7V.

With the system according to the invention all the protection functions (against polarity inversion of the battery voltage, against pulse voltage overloads, drops or sudden "holes" in the battery voltage etc) can be incorporated in the centralized voltage regulator SMPS. The local supplies LR1, LR2 ... LRn can now be voltage regulators of standard, low input voltage type and therefore of low cost.

With a suitable dimensioning of the centralized regulator SMPS it is moreover possible to achieve an appreciable reduction in the overall power dissipated as heat.

This can be established on the basis of the following considerations.

In Figures 1 and 2, $I_1$, $I_2$ ... $I_n$ indicate the currents delivered by each linear regulator LR1, LR2 ... LRn.

Supposing, for simplification, that the voltages delivered by individual linear regulators are equal to one an-

2

other and to a value $V_{cc}$; in the prior art supply system of Figure 1 the overall power dissipated is equal to:

$$P_{D1} = (V_B - V_{cc}) \times \sum_{k=1}^{n} I_k \qquad (I)$$

In the case of supply systems according to the invention shown in Figure 2 the overall power dissipated is, on the other hand, equal to:

$$P_{D2} = (V_R / \eta - V_{cc}) \times \sum_{k=1}^{n} I_k \qquad (II)$$

in which $\eta$ is the efficiency of the switching regulator SMPS.

The above expressions for the power dissipated are valid on the hypothesis that the currents consumed by individual linear voltage regulation stages are negligible.

From the above expressions (I) and (II) it results that the relative variation of the power dissipated between the arrangement according to the invention and the prior art system is equal to:

$$(P_{D1} - P_{D2})/PD_{D1} = \frac{V_B - V_R/\eta}{V_B - V_{cc}} \qquad (III)$$

From this expression it is observed that if the efficiency $\eta$ of the centralized voltage regulator SMPS is greater than $V_R/V_B$ the system according to the invention allows an appreciable reduction in the overall power dissipated.

In effect, with the values of $V_R$ and $V_B$ indicated above ($V_R$ = 7V and $V_B$ = 14V) a reduction in the power dissipated with a centralized voltage regulator having an efficiency greater than 50% is achieved.

The above relation (III) shows, moreover, that the power dissipated falls more the lower is $V_{cc}$. It is therefore convenient that the electronic system supplied by means of the linear regulators LR1 ... LRn operate with relatively low supply voltages, for example equal to 3.3V.

The advantages which can be achieved with the supply system according to the invention are therefore evident.

The centralized voltage regulator SMPS can be formed as a multi-stage regulator, that is to say comprising for example a plurality of parallel DC/DC converters, in such a way as to ensure a high redundancy in view of the particular reliability which in general such a system needs to have. The centralized regulator can be arranged to perform diagnostic detection and signalling of anomalous operating conditions or failures.

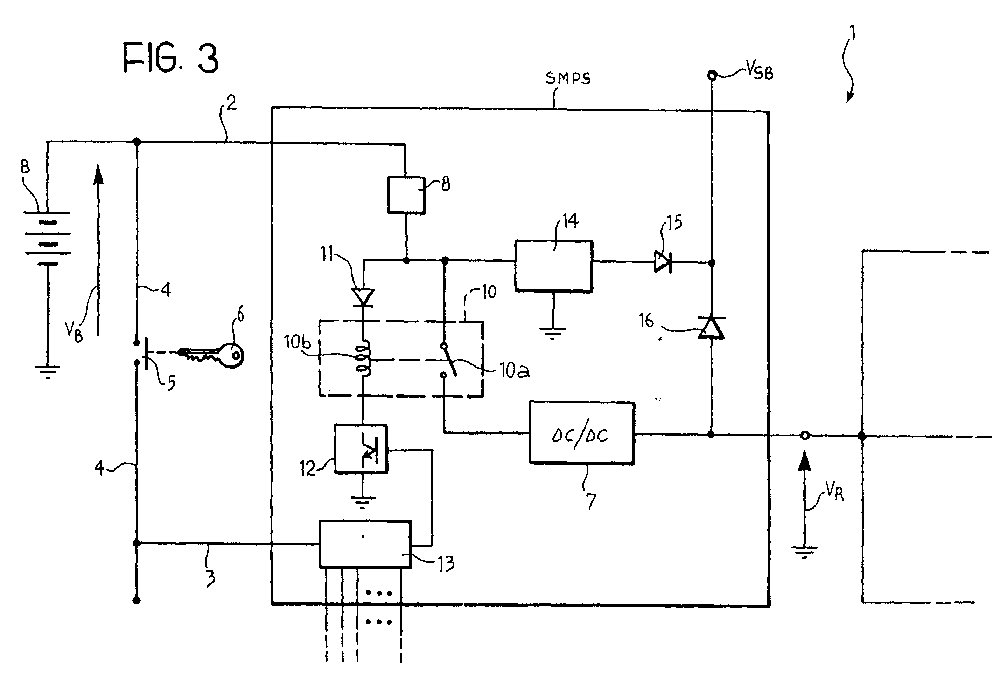

Hereinafter, with reference to Figure 3 of the attached drawings, there will be described an embodiment of a centralized voltage regulator suitable for use in a system according to the invention.

In Figure 3 is shown a centralized voltage regulator SMPS with an input terminal 2 directly and stably connected to the battery B, and an input terminal 3 connected to a line 4 which is connected to the battery B and in which is interposed a manually operable switch 5, for example by means of the key 6 for controlling the ignition and starter switch of the motor vehicle.

The centralized regulator SMPS includes a DC/DC converter 7 the input of which is connected to the terminal 2 through a protection device 8 and the contact 10a of a power relay 10. The protection device 8 is for example a varistor for overload protection.

The relay 10 comprises an excitation winding or solenoid 10b which is connected to the protection device 8 through a protection diode 11 for protecting against polarity inversion of the battery B. In series with the winding 10b of the relay 10 is disposed a control device 12 such as, for example, a transistor controlled by a logic circuit 13.

The logic circuit 13 has one input connected to the terminal 3 and another plurality of inputs possibly intended to be connected to corresponding "power latch" outputs of electronic control systems or units supplied by the system according to the invention.

The logic circuit 13 is arranged to render the control device 12 conductive to cause current to flow in the winding 10b of the relay 10 when the voltage delivered by the battery B is present on the terminal 3, or when a power latch signal is present on one of the other inputs of the circuit 13, that is to say a signal requesting the supply of electrical power even after the switch 5 has been opened.

The flow of current in the winding 10b causes closure of the contact 10a of the relay 10 and coupling of the input of the DC/DC converter 7 to the battery B. The DC/DC converter 7 is arranged to provide a stabilized DC output voltage $V_R$ the value of which is suitably predetermined on the basis of the previously explained considerations.

The centralized voltage regulator SMPS can further include a lower power voltage regulator, indicated 14 in Figure 3, substantially in parallel with the DC/DC converter 7. The lower power voltage regulator 14 is intended to allow possible supply of electronic control units which need to be permanently supplied, and for which it is not convenient to maintain the DC/DC converter 7 in permanent operation.

If the outputs of the converter 7 and the regulator 14 are coupled together by two diodes 15 and 16 as is shown in Figure 3, the standby voltage $V_{SB}$ obtainable from the regulator 14 is slightly less than the regulated voltage $V_R$ delivered in operation by the converter 7.

**Claims**

1. A supply system (1) for a plurality of electronic devices and/or units (U1 ... Un), including a non-stabilized source of DC voltage (battery B) and in which between the source (B) and the inputs of said electronic devices and/or units (U1 ... Un) is interposed a centralized voltage regulator (SMPS) arranged to provide a stabilized output voltage ($V_R$) lower than that of said source (B);

   **characterized in that** a plurality of voltage regulators (LR1 ... LRn) is provided, having a respective input connected to the output of the centralized voltage regulator (SMPS) and arranged to supply at a respective output a stabilized DC voltage ($V_{cc1}$ ... $V_{ccn}$) of predetermined value to an associated electronic device or unit (U1 ... Un);

   and **in that** the said voltage regulators (LR1 ... LRn) are dimensioned in such a way as to deliver their respective expected stabilized voltages ($V_{cc1}$ ... $V_{ccn}$) when their respective inputs receive the stabilized voltage ($V_R$) delivered by the centralized voltage regulator (SMPS); ($V_R$) being of a value lower than that of said voltage source (B) but greater than the (maximum) value of the stabilized voltages ($V_{cc1}$ ... $V_{ccn}$).

2. A supply system according to Claim 1, **characterized in that** the said centralized voltage regulator (SMPS) includes at least one DC/DC converter (7).

3. A supply system according to Claim 1 or Claim 2, **characterized in that** the said centralized voltage regulator (SMPS) includes voltage overload and current overload protection means (8).

4. A supply system according to Claim 2 or Claim 3, for use in an electronic system a part of which is connectable to the voltage source (B) following closure of a manually operable control switch (5); the system being **characterized in that** the said centralized regulator (SMPS) includes switching means (10) interposed between the input of the DC/DC converter (7) and the said voltage source (B); the said switching means (10) being operatively coupled to the said control switch (5) in such a way that it connects the DC/DC converter (7) to the said source (B) when the said control switch (5) is closed.

5. A supply system according to Claim 4, **characterized in that** the said switching means comprise a power relay (10).

6. A supply system according to Claim 4 or Claim 5, particularly for use in a motor vehicle, in which at least one electronic unit (U) is able to emit a power latch signal for requiring electrical power supply even when said control switch (5, 6) is open, the system being **characterized in that** the said switching means include a control circuit (13) which is connected to at least the said electronic unit and is operable to cause coupling of the DC/DC converter (7) to the voltage source (B) when the said at least one unit (U) provides a power latch signal.

7. A supply system according to any of Claims from 2 to 6, **characterized in that** the said centralized voltage regulator (SMPS) includes a low power voltage regulator (14) substantially in parallel with the said DC/DC converter (7).

8. A supply system according to any preceding claim, **characterized in that** the said centralized regulator (SMPS) is a multi-stage switching regulator.

**Patentansprüche**

1. Versorgungssystem (1) für eine Mehrzahl von elektronischen Geräten und/oder Einheiten (U1 ... Un), einschließlich einer nicht stabilisierten Gleichstromspannungsquelle (Batterie B), wobei zwischen der Quelle (B) und den Eingängen der elektronischen Geräte und/oder Einheiten (U1 ... Un) ein zentraler Spannungsregler (SMPS) eingeschoben ist, der zum Abgeben einer stabilisierten Ausgangsspannung ($V_R$) angeordnet ist, welche geringer ist als jene der Quelle (B);

   **dadurch gekennzeichnet, dass** eine Mehrzahl von Spannungsreglern (LR1 ... LRn) vorgesehen ist, welche einen entsprechenden Eingang besitzen, der am Ausgang des zentralen Spannungsreglers (SMPS) angeschlossen ist, und die dazu angeordnet sind, an einem entsprechenden Ausgang eine stabilisierte Gleichstromspannung ($V_{cc1}$ ... $V_{ccn}$) mit einem vorbestimmten Wert an ein dazugehöriges elektronisches Gerät oder eine dazugehörige elektronische Einheit (U1 ... Un) zu liefern;

   und dass die Spannungsregler (LR1 ... LRn) solcherart dimensioniert sind, um ihre jeweils zu erwartenden stabilisierten Spannungen ($V_{cc1}$ ... $V_{ccn}$) abzugeben, wenn ihre jeweiligen Eingänge die stabilisierte Spannung ($V_R$) empfangen, welche vom zentralen Spannungsregler (SMPS) abgegeben wird;

   wobei ($V_R$) um einen Wert geringer ist als jene der Spannungsquelle (B), jedoch größer ist als der (höchst) Wert der stabilisierten Spannungen ($V_{cc1}$ ... $V_{ccn}$).

2. Versorgungssystem gemäß Anspruch 1, **dadurch gekennzeichnet, dass** der zentrale Spannungsregler (SMPS) zumindest einen Gleichstrom/Gleichstrom-Umformer (7) umfasst.

3. Versorgungssystem gemäß Anspruch 1 oder Anspruch 2, **dadurch gekennzeichnet, dass** der zentrale Spannungsregler (SMPS) Spannungsüberlastungs- und Stromüberlastungs-schutzmittel (8) umfasst.

4. Versorgungssystem gemäß Anspruch 2 oder Anspruch 3, zur Verwendung in einem elektronischen System, von dem ein Teil nach dem Schließen eines händisch bedienbaren Steuerschalters (5) mit der Spannungsquelle (B) verknüpfbar ist; wobei das System **dadurch gekennzeichnet ist, dass** der zentrale Regler (SMPS) Schaltmittel (10) umfasst, die zwischen dem Eingang des Gleichstrom/Gleichstrom-Umformers (7) und der Spannungsquelle (B) eingeschoben sind; die Schaltmittel (10) mit dem Steuerschalter (5) solcherart betriebsfähig verkoppelt sind, dass sie den Gleichstrom/Gleichstrom-Umformer (7) mit der Quelle (B) verbinden, wenn der Steuerschalter (5) geschlossen wird.

5. Versorgungssystem gemäß Anspruch 4, **dadurch gekennzeichnet, dass** die Schaltmittel ein Leistungsrelais (10) umfassen.

6. Versorgungssystem gemäß Anspruch 4 oder Anspruch 5, insbesondere zur Verwendung in einem Kraftfahrzeug, wobei zumindest eine elektronische Einheit (U) in der Lage ist, sogar dann ein Stromsperrsignal hinsichtlich des Bedarfs an einer elektrischen Stromversorgung abzugeben, wenn der Steuerschalter (5, 6) offen ist, wobei das System **dadurch gekennzeichnet ist, dass** die Schaltmittel einen Steuerkreis (13) umfassen, der zumindest an der elektronischen Einheit angeschlossen ist und dazu betriebsfähig ist, eine Verkoppelung des Gleichstrom/Gleichstrom-Umformers (7) mit der Spannungsquelle (B) zu bewirken, wenn die zumindest eine Einheit (U) ein Stromsperrsignal abgibt.

7. Versorgungssystem gemäß einem der Ansprüche 2 bis 6, **dadurch gekennzeichnet, dass** der zentrale Spannungsregler (SMPS) einen Niederleistungs-Spannungsregler (14) umfasst, der zum Gleichstrom/Gleichstrom-Umformer (7) im Wesentlichen parallel ist.

8. Versorgungssystem gemäß irgendeinem vorhergehenden Anspruch, **dadurch gekennzeichnet, dass** der zentrale Regler (SMPS) ein mehrstufiger Schaltregler ist.

**Revendications**

1. Système d'alimentation (1) pour une pluralité de dispositifs et/ou d'unités électroniques (U1 ... Un), comprenant une source non stabilisée de tension CC (batterie B), et dans lequel entre la source (B) et les entrées desdits dispositifs et/ou desdites unités électroniques (U1 ... Un) est intercalé un régulateur centralisé (SMPS) de tension agencé pour fournir une tension de sortie stabilisée ($V_R$) inférieure à celle de ladite source (B) ;

   **caractérisé en ce qu'**une pluralité de régulateurs de tension (LR1 ... LRn) est prévue, dont une entrée respective est reliée à la sortie du régulateur centralisé (SMPS) de tension et agencée pour alimenter à une sortie respective une tension CC stabilisée ($V_{cc1}$ ... $V_{ccn}$) d'une valeur prédéterminée à destination d'un dispositif ou d'une unité électronique associé(e) (U1 ... Un);

et **en ce que** lesdits régulateurs de tension (LR1 ... LRn) sont dimensionnés de façon à délivrer leurs tensions stabilisées prévues respectives ($V_{cc1}$ ... $V_{ccn}$) lorsque leurs entrées respectives reçoivent la tension stabilisée ($V_R$) délivrée par le régulateur centralisé (SMPS) de tension ; ($V_R$) étant d'une valeur inférieure à celle de ladite source de tension (B) mais supérieure à la valeur (maximale) des tensions stabilisées ($V_{cc1}$ ... $V_{ccn}$).

2. Système d'alimentation selon la revendication 1, **caractérisé en ce que** ledit régulateur centralisé (SMPS) de tension comprend au moins un convertisseur CC/CC (7).

3. Système d'alimentation selon la revendication 1 ou 2, **caractérisé en ce que** ledit régulateur centralisé (SMPS) de tension comprend des moyens de protection de surcharge de tension et de surcharge de courant (8).

4. Système d'alimentation selon la revendication 2 ou 3, pour une utilisation dans un système électronique dont une partie peut être reliée à la source de tension (B) suite à la fermeture d'un commutateur de commande (5) à commande manuelle ; le système étant **caractérisé en ce que** ledit régulateur centralisé (SMPS) comprend des moyens de commutation (10) intercalés entre l'entrée du convertisseur CC/CC (7) et ladite source de tension (B) ; lesdits moyens de commutation (10) étant couplés de façon opérationnelle audit commutateur de commande (5) de telle sorte qu'ils relient le convertisseur CC/CC (7) à ladite source (B) lorsque ledit commutateur de commande (5) est fermé.

5. Système d'alimentation selon la revendication 4, **caractérisé en ce que** lesdits moyens de commutation comprennent un relais de puissance (10).

6. Système d'alimentation selon la revendication 4 ou 5, en particulier pour une utilisation dans un véhicule automobile, dans lequel au moins une unité électronique (U) est capable d'émettre un signal de verrouillage de puissance pour demander une alimentation électrique même lorsque ledit commutateur de commande (5, 6) est ouvert, le système étant **caractérisé en ce que** lesdits moyens de commutation comprennent un circuit de commande (13) qui est relié au moins à ladite unité électronique et qui est utilisable pour provoquer le couplage du convertisseur CC/CC (7) avec la source de tension (B) lorsque ladite au moins une unité (U) fournit un signal de verrouillage de puissance.

7. Système d'alimentation selon l'une quelconque des revendications 2 à 6, **caractérisé en ce que** ledit régulateur centralisé (SMPS) de tension comprend un régulateur de tension basse puissance (14) substantiellement en parallèle avec ledit convertisseur CC/CC (7).

8. Système d'alimentation selon l'une quelconque des revendications précédentes, **caractérisé en ce que** ledit régulateur centralisé (SMPS) est un régulateur à découpage à plusieurs étages.

# FIG. 1
(PRIOR ART)

$$I = \sum_{k=1}^{n} I_k$$

EP 0 805 540 B1

# FIG. 2

$$I = \frac{V_R}{\eta V_B} \cdot \sum_{k=1}^{n} I_k$$

$$I = \sum_{k=1}^{n} I_k$$

SMPS

$V_B$

$V_R$

$\eta$

B

LR1    $I_1$

$V_{CC1}$

LR2    $I_2$

$V_{CC2}$

LRn    $I_n$

$V_{CCn}$

1

EP 0 805 540 B1

FIG. 3